Europäisches Patentamt

European Patent Office

Office européen des brevets

(11) Numéro de publication : **0 508 922 A1**

# (12) DEMANDE DE BREVET EUROPEEN

(21) Numéro de dépôt : **92460008.3**

(22) Date de dépôt : **01.04.92**

(51) Int. Cl.⁵ : **A23K 1/16**

(30) Priorité : **09.04.91 FR 9104553**

(43) Date de publication de la demande :
**14.10.92 Bulletin 92/42**

(84) Etats contractants désignés :
**AT BE CH DE DK ES GB IT LI NL SE**

(71) Demandeur : **Cohas, Pascal**
**27, Allée Gabriel Andouard**
**F-53000 Laval (FR)**

(71) Demandeur : **Cohas, Patrice**
**20, Rue de la Motte**
**F-35630 Hede (FR)**

(72) Inventeur : **Cohas, Pascal**
**27, Allée Gabriel Andouard**
**F-53000 Laval (FR)**
Inventeur : **Cohas, Patrice**
**20, Rue de la Motte**
**F-35630 Hede (FR)**

(74) Mandataire : **Le Guen, Louis François**
**Cabinet Louis Le Guen 38, rue Levavasseur**
**B.P. 91**
**F-35802 Dinard Cédex (FR)**

(54) **Procédé de préparation d'un additif alimentaire pour animaux.**

(57)    La présente invention concerne un procédé de préparation d'un additif alimentaire pour animaux, caractérisé en ce qu'il consiste :

a) à mélanger des levures ou des enzymes ou des ferments à de l'urée et maintenir ledit mélange à un Ph acide,

b) à laisser agir, dans un processus d'hydrolyse, lesdites levures ou enzymes ou des ferments pendant une durée d'au moins 8 heures, à une température de 38° C ± 2° C,

c) puis à mélanger au produit obtenu à l'étape précédente, un ou plusieurs acides carboxyliques et à laisser agir ledit mélange pendant au moins 8 heures à une température d'environ 60° C.

EP 0 508 922 A1

La présente invention concerne un procédé de préparation d'un additif alimentaire, notamment, pour animaux.

On connaît la valeur nutritive des protéines et des acides aminés. On a cherché à mettre au point un procédé qui permette d'obtenir un additif alimentaire riche en protéines et en acides aminés et qui soit relativement aisé à mettre en oeuvre industriellement.

Un procédé selon l'invention consiste:

a) à mélanger des levures ou des enzymes ou des ferments à de l'urée et à maintenir ledit mélange à un Ph acide,

b) à laisser agir, dans un processus d'hydrolyse, lesdites levures ou enzymes ou ferments pendant une durée d'au moins 8 heures, à une température de 38° C ± 2° C,

c) puis à mélanger au produit obtenu à l'étape précédente, un ou plusieurs acides carboxyliques et à laisser agir ledit mélange pendant une durée d'au moins 8 heures à une température comprise entre 36 et 72° C.

Le produit obtenu est riche en protéines issues de l'hydrolyse de l'urée et en acides aminés issus de ce processus et de l'action du ou des acides carboxyliques. Il est destiné à être mélangé à l'eau de boisson d'animaux.

Pour enrichir encore le produit obtenu pendant le processus d'hydrolyse de l'étape b), on apporte de la mélasse et du lactose.

Parmi les levures que l'on peut employer, on peut citer les levures du type " Saccharomyces Cerevisiae" ou "Carlsbergensis". On peut aussi employer des enzymes bactériennes du type " Bacillus Subtilus" ainsi que des ferments du type "Lactobacillus Lactis".

La concentration en protéines de l'hydrolysat d'urée est au minimum de 5 % apportée par l'urée et le Ph est maintenu à une valeur comprise entre 4 et 6, avantageusement 5,5.

La part d'acides carboxyliques ajoutés est fonction de la concentration des levures ou des enzymes ou des ferments et du type d'acide utilisé.

On a obtenu de bons résultats avec de l'acide adipique avec la formation, dans le produit final, de lysine.

Si on ajoute un autre acide carboxylique, on obtient un acide aminé différent. En mélangeant les différents produits obtenus, il est possible de réaliser un complexe d'acides aminés.

Selon la forme que l'on désire donner au produit commercialisé, il peut être dilué ou concentré par des techniques bien connues de l'homme de métier. Il peut également être mis sous forme de poudre après atomisation ou autre forme de séchage, ou absorbé sur support type silice pour incorporation dans les aliments du bétail et des animaux de basse-cour.

**Revendications**

**1)** Procédé de préparation d'un additif alimentaire pour animaux, caractérisé en ce qu'il consiste:

a) à mélanger des levures ou des enzymes ou des ferments à de l'urée et maintenir ledit mélange à un Ph acide,

b) à laisser agir, dans un processus d'hydrolyse, lesdites levures ou enzymes ou ferments pendant une durée d'au moins 8 heures, à une température de 38° C ± 2° C,

c) puis à mélanger au produit obtenu à l'étape précédente, un ou plusieurs acides carboxyliques et à laisser agir ledit mélange pendant au moins 8 heures à une température d'environ 60° C.

**2)** Procédé selon la revendication 1, caractérisé en ce qu'on apporte, à l'étape b), de la mélasse et du lactose.

**3)** Procédé selon une des revendications précédentes, caractérisé en ce que l'hydrolysant d'urée a une concentration au minimum de 5% de protéines apportées par l'urée.

**4)** Procédé selon une des revendications précédentes, caractérisé en ce que le Ph pendant le processus d'hydrolyse est maintenu à une valeur comprise entre 4 et 6.

Office européen
des brevets

**RAPPORT DE RECHERCHE EUROPEENNE**

Numero de la demande

EP  92 46 0008

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 395 556  (COHAS,PASCAL et al.)<br>* En entier *<br>--- | 1-4 | A 23 K    1/16 |
| A | FR-A-2 214 750  (GENVRAIN)<br>* En entier *<br>--- | 1 | |
| A | BIOLOGICAL ABSTRACTS, volume 77, 1984, no. 58789, Philadelphia, US; MIGNONE, CARLOS F. et al.: "Production of a protein product by fermentation: Biologic evaluation and alimentary studies for fowls", & REVISTA LATINOAMERICANA DE MICROBIOLOGIA (MEXICO) 1982 (RECD 1983), vol. 24, no. 1, pages 25-34<br>* Résumé *<br>--- | 1 | |
| A | DE-A-3 024 994  (NEUMAIER, ROLF)<br>* Revendications 1-3 *<br>--- | 1 | |
| A | EP-A-0 076 964  (ALFA STRAW INERNATIONAL)<br>* En entier *<br>--- | 1,2 | **DOMAINES TECHNIQUES RECHERCHES (Int. Cl.5)**<br><br>A 23 K |
| A | FR-A-1 495 660  (PFEIFER & LANGEN)<br>* En entier *<br>--- | 1,2 | |
| A | FR-A- 880 354  (POMOSIN WERKE)<br>* En entier *<br>----- | 1,2 | |

Le présent rapport a été établi pour toutes les revendications

| Lieu de la recherche | Date d'achèvement de la recherche | Examinateur |
|---|---|---|
| LA HAYE | 04-06-1992 | DEKEIREL M.J. |

EPO FORM 1503 03.82 (P0402)